(19) **Europäisches Patentamt / European Patent Office / Office européen des brevets**

(11) **EP 4 481 586 A1**

(12) **EUROPEAN PATENT APPLICATION**
published in accordance with Art. 153(4) EPC

(43) Date of publication:
**25.12.2024 Bulletin 2024/52**

(21) Application number: **23774010.5**

(22) Date of filing: **24.03.2023**

(51) International Patent Classification (IPC):
**G06F 16/635** (2019.01)

(52) Cooperative Patent Classification (CPC):
**G06F 16/635**

(86) International application number:
**PCT/CN2023/083692**

(87) International publication number:
**WO 2023/179765 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 CN 202210307260**
**25.03.2022 CN 202210306451**

(71) Applicant: **Anhui Huami Health Technology Co., Ltd.**
**Anhui 230088 (CN)**

(72) Inventors:
- **ZHANG, Cong**
  **Hefei, China (Anhui) Pilot Free Trade Zone Anhui 230088 (CN)**
- **YU, Yi**
  **Hefei, China (Anhui) Pilot Free Trade Zone Anhui 230088 (CN)**
- **MENG, Zi**
  **Hefei, China (Anhui) Pilot Free Trade Zone Anhui 230088 (CN)**
- **ZHU, Guokang**
  **Hefei, China (Anhui) Pilot Free Trade Zone Anhui 230088 (CN)**

(74) Representative: **Bandpay & Greuter**
**11 rue Christophe Colomb**
**75008 Paris (FR)**

(54) **MULTIMEDIA RECOMMENDATION METHOD AND APPARATUS**

(57)    The present disclosure provides a method for multimedia recommendation and an apparatus thereof. The method for multimedia recommendation includes: obtaining first user data of a user wearing a wearable device that is collected by the wearable device; obtaining second user data of the user, where the second user data includes at least one of attribute data of the user or multimedia preference data of the user; obtaining scenario data corresponding to a current multimedia usage scenario; determining a target multimedia item from a plurality of candidate multimedia items based on the first user data, the second user data and the scenario data; and recommending the target multimedia item to the user.

EP 4 481 586 A1

wearable device 102

storage 111

sensors 108

processor 110

100

application 118

intermediate device106

116

Network

server program 112

database 114

server 104

FIG.1

**Description**

**CROSS-REFERENCE** TO RELATED APPLICATIONS

This application claims priority of Chinese Patent Application No. 202210307260.8, filed on March 25, 2022, and Chinese Patent Application No. 202210306451.2, filed on March 25, 2022, the entire disclosures of both of which are hereby incorporated by reference.

TECHNICAL FIELD

The present disclosure relates to the field of computer technologies, specifically to the fields of deep learning and multimedia recommendation, and in particular to methods and apparatuses for multimedia recommendation.

BACKGROUND

Systems for personalized multimedia recommendation recommend suitable multimedia contents for respective users having different physical, mental and social states. In related technologies, realization of the systems for personalized multimedia recommendation mainly relies on the data detected in the processes of interaction between applications of terminal devices and the users. However, such data describes the characteristics of the user in a relatively one-sided manner, and the effect of multimedia recommendation needs to be further improved.

**SUMMARY**

In a first aspect of the present disclosure, a method for multimedia recommendation is provided, including: obtaining first user data of a user wearing a wearable device that is collected by the wearable device; obtaining second user data of the user, where the second user data includes at least one of attribute data of the user or multimedia preference data of the user; obtaining scenario data corresponding to a current multimedia usage scenario; determining a target multimedia item from a plurality of candidate multimedia items based on the first user data, the second user data and the scenario data; and recommending the target multimedia item to the user.

According to some implementations of the present disclosure, the method further includes: after recommending the target multimedia item to the user, obtaining real-time physiological data of the user collected by the wearable device during playback of the target multimedia item; updating a recommendation parameter of at least one first multimedia item in the plurality of candidate multimedia items based on the real-time physiological data of the user, where the recommendation parameter includes at least one of a recommending weight or a recommending frequency, and the updated recommendation parameter is used for subsequently selecting a multimedia item to be recommended to the user in the current multimedia usage scenario.

According to some implementations of the present disclosure, the method further includes: after recommending the target multimedia item to the user, obtaining user interaction data corresponding to the target multimedia item, and updating the recommending parameter of at least one first multimedia item in the plurality of candidate multimedia items based on the user interaction data.

According to some implementations of the present disclosure, updating the recommending parameter of at least one first multimedia item in the plurality of candidate multimedia items, includes: determining a first score of the target multimedia item based on the real-time physiological data of the user collected by the wearable device during playback of the target multimedia item; determining a second score of the target multimedia item based on user interaction data corresponding to the target multimedia item; obtaining a final score of the target multimedia item based on the first score and the second score; and determining an update strategy for the recommendation parameter of the at least one first multimedia item based on the final score, where the update strategy includes at least one of whether or not to perform adjustment, the adjustment performed in a direction of increase or decrease, or a magnitude of the adjustment.

According to some implementations of the present disclosure, the plurality of candidate multimedia items are divided into a plurality of categories, and the at least one first multimedia item belongs to the same category as the target multimedia item.

According to some implementations of the present disclosure, determining the update strategy for the recommendation parameter of the at least one first multimedia item based on the final score, includes: in response to the final score of the target multimedia item being less than or equal to a first score threshold, decreasing at least one of a recommending weight or a recommending frequency of the at least one first multimedia item; or, in response to the final score of the target multimedia item being greater than or equal to a second score threshold, increasing at least one of a recommending weight or a recommending frequency of the at least one first multimedia item.

According to some implementations of the present disclosure, determining the update strategy for the recommendation parameter of the at least one first multimedia item based on the final score, includes: in response to the final score of the target multimedia item being greater than the first score threshold and less than the second score threshold, maintaining at least one of a recommending weight or a recommending frequency of the at least one first multimedia item unchanged.

According to some implementations of the present disclosure, the first user data includes physiological data obtained from at least one physiological measurement of the user based on the wearable device.

According to some implementations of the present disclosure, the scenario data includes at least one of environmental data of the current environment, time data, or intention data.

According to some implementations of the present disclosure, determining the target multimedia item from the plurality of candidate multimedia items based on the first user data, the second user data, and the scenario data includes: determining at least one second multimedia item from the plurality of candidate multimedia items based on the first user data, the second user data, and the scenario data; and determining the target multimedia item from the at least one second multimedia item based on a recommendation parameter of the at least one second multimedia item.

According to some implementations of the present disclosure, determining the target multimedia item from the plurality of candidate multimedia items based on the first user data, the second user data, and the scenario data, includes: obtaining target user data of the user based on the first user data, the second user data and the scenario data; obtaining multimedia characteristic data of the plurality of candidate multimedia items; and determining the target multimedia item from the plurality of candidate multimedia items based on the target user data and the multimedia characteristic data of the plurality of candidate multimedia items.

According to some implementations of the present disclosure, determining the target multimedia item from the plurality of candidate multimedia items based on the target user data and the multimedia characteristic data of the plurality of candidate multimedia items, includes: determining recommendation probabilities of the plurality of candidate multimedia items based on the target user data and the multimedia characteristic data of the plurality of candidate multimedia items; and determining the target multimedia item from the plurality of candidate multimedia items based on the recommendation probabilities of the plurality of candidate multimedia items.

According to some implementations of the present disclosure, the second user data includes attribute data of the user, and determining the target multimedia item from the plurality of candidate multimedia items based on the first user data, the second user data, and the scenario data, includes: obtaining target user data of the user based on the first user data and the attribute data of the user; and determining the target multimedia item from the plurality of candidate multimedia items based on the target user data and the scenario data.

According to some implementations of the present disclosure, the second user data includes multimedia preference data of the user, and determining the target multimedia item from the plurality of candidate multimedia items based on the first user data, the second user data, and the scenario data, includes: correcting the multimedia preference data of the user based on the first user data and the scenario data, to obtain multimedia preference correction data of the user; and determining the target multimedia item from the plurality of candidate multimedia items based on the multimedia preference correction data.

According to some implementations of the present disclosure, obtaining the second user data of the user includes: obtaining multimedia playback history data of the user; and obtaining the multimedia preference data of the user based on the multimedia playback history data.

According to some implementations of the present disclosure, correcting the multimedia preference data of the user based on the first user data and the scenario data to obtain multimedia preference correction data of the user, includes: obtaining a multimedia preference correction parameter based on the first user data and the scenario data; and obtaining the multimedia preference correction data of the user based on the multimedia preference data and the multimedia preference correction parameter.

According to some implementations of the present disclosure, the multimedia preference data includes a multimedia preference vector of length M, and the multimedia preference correction parameter includes a multimedia preference correction vector of length M. Obtaining the multimedia preference correction data of the user based on the multimedia preference data and the multimedia preference correction parameter, includes: multiplying the M elements in the multimedia preference vector with the M elements in the multimedia preference correction vector to obtain the multimedia preference correction data.

According to some implementations of the present disclosure, determining the target multimedia item from the plurality of candidate multimedia items based on the multimedia preference correction data, includes: selecting the target multimedia item from the plurality of candidate multimedia items based on the multimedia preference correction data and the multimedia playback history data of the user.

According to some implementations of the present disclosure, the plurality of candidate multimedia items include a plurality of audio candidates.

According to some implementations of the present disclosure, the current multimedia usage scenario includes stress relief and relaxation, sleep aid, exercise or concentration.

In a second aspect of the present disclosure, an apparatus for multimedia recommendation is provided, including: a first obtaining module, configured to obtain first user data of a user wearing a wearable device that is collected by the wearable device; a second obtaining module, configured to obtain second user data of the user, where the second user data includes at least one of attribute data of the user or multimedia preference data of the user; a third acquisition module, configured to obtain scenario data corresponding to a current multimedia usage scenario; a determination module, configured to determine a target multimedia item from a plurality of candidate multimedia items based on the first user data, the second user data and the scenario data; and a recommendation module, configured to recommend the target multimedia item to the user.

In a third aspect of the present disclosure, an electronic device is provided, including: at least one processor, and a memory storing at least one instruction; where the at least one processor is configured to execute the at least one instruction, so as to implement the method for multimedia recommendation in any implementation of the first aspect of the present disclosure.

In a fourth aspect of the present disclosure, a non-transient computer-readable storage medium storing computer instructions is provided, where the computer instructions are configured to cause a computer device to perform the method for multimedia recommendation in any implementation of the first aspect of the present disclosure.

In a fifth aspect of the present disclosure, a computer program product is provided, including a computer program. The computer program, when executed by a computer device, implementing the method for multimedia recommendation in any implementation of the first aspect of the present disclosure.

BRIEF DESCRIPTION OF DRAWINGS

The foregoing and/or additional aspects and advantages of the present disclosure will become apparent and readily understood from the following description of implementations in conjunction with the accompanying drawings.

FIG. 1 is a schematic diagram of an example system for multimedia recommendation in some implementations of the present disclosure.
FIG. 2 is a flowchart of a method for multimedia recommendation in some implementations of the present disclosure.
FIG. 3 is another flowchart of the method for multimedia recommendation in some implementations of the present disclosure.
FIG. 4 is another flowchart of the method for multimedia recommendation in some implementations of the present disclosure.
FIG. 5 is another flowchart of the method for multimedia recommendation in some implementations of the present disclosure.
FIG. 6 is another flowchart of the method for multimedia recommendation in some implementations of the present disclosure.
FIG. 7 is another flowchart of the method for multimedia recommendation in some implementations of the present disclosure.
FIG. 8 is another flowchart of the method for multimedia recommendation in some implementations of the present disclosure.
FIG. 9 is an architectural diagram of a system for multimedia recommendation driven by a wearable device in some implementations of the present disclosure.
FIG. 10 is another flowchart of the method for multimedia recommendation in some implementations of the present disclosure.
FIG. 11 is a schematic diagram of a structure of a system for multimedia recommendation in some implementations of the present disclosure.
FIG. 12 is a schematic diagram of an apparatus for multimedia recommendation in some implementations of the present disclosure.
FIG. 13 is a schematic block diagram of an electronic device in some implementations of the present disclosure.

**DETAILED DESCRIPTION**

Implementations of the present disclosure are described in detail below, and examples of the implementations are shown in the accompanying drawings, where identical or similar reference numbers throughout the description represent same or similar elements or elements having same or similar functions. The implementations described below with reference to the accompanying drawings are exemplary and intended to be used for explaining the present disclosure, and are not to be construed as limiting the present disclosure.

Some implementations of the present disclosure provide a method for multimedia recommendation. The multimedia may include, but is not limited to, audio, pictures, videos or the like. For example, the multimedia may be photos, music, short videos, MV (Music Video), audio news, audio books, or the like.

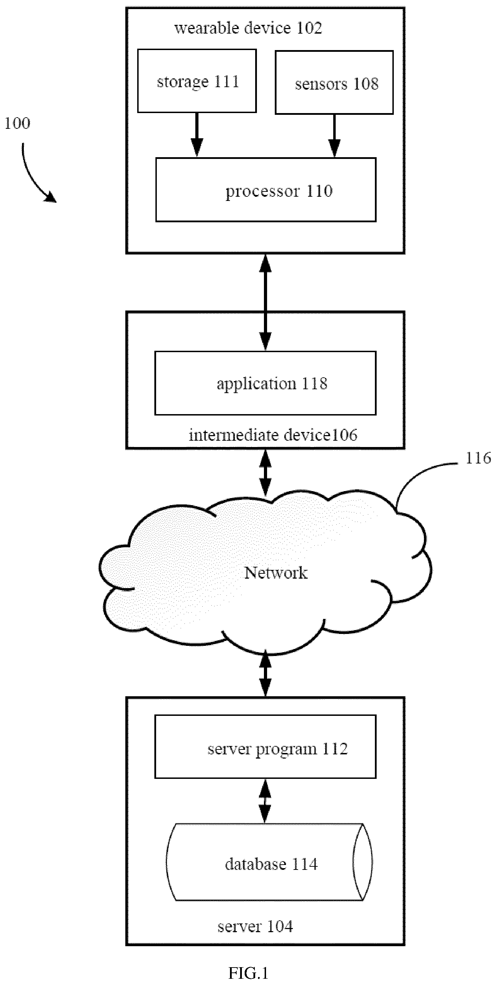

FIG. 1 is a schematic diagram of an example system for multimedia recommendation in some implementations of the present disclosure. As shown in FIG. 1, the system for multimedia recommendation includes a wearable device 102, a server 104, and an intermediate device 106.

The wearable device 102 is a computing device configured to be worn by an individual during operation. The wearable device 102 may be realized as a wrist-worn device, such as a watch, a bracelet, a bangle or the like. Alternatively, the wearable device 102 may be realized as a head mounted device, such as eyeglasses, a headband, a helmet, a headphone or the like. Alternatively, the wearable device may be realized as a finger-worn device or the like. Alternatively, the wearable device 102 may be an electronic device attached to a garment or other wearable devices. The present disclosure does not limit the specific implementations of the wearable device 102.

In some implementations, the wearable device 102 includes one or more sensors 108, which may include any one or more selected from a group including an activity sensor, a positioning sensor, an environmental sensor, a physiological sensor and the like. The activity sensor is configured to detect a movement or a change in the position or orientation of the wearable device 102. The activity sensor may include at least one of an accelerometer, a gyroscope, a gravity sensor or the like. The environmental sensor is configured to detect the environment in which the wearable device 102 is located. The environmental sensor may include at least one of a positioning sensor, an ambient temperature sensor, an ambient light sensor or the like. The physiological sensor is configured to detect one or more physiological parameters of a user of the wearable device 102. The physiological sensor may include at least one of a photoplethysmogram (PPG) sensor, an electrocardiogram (ECG) sensor, a body fat sensor, a blood pressure sensor, a stress sensor, a vascular sensor, a temperature sensor or the like. The physiological parameter represents a measurable parameter related to one or more important organ systems of the user of the wearable device 102, such as the cardiovascular system, the respiratory system, the autonomic nervous system, the body temperature system or the like. For example, the physiological parameter includes at least one of a heart rate, a heart rate variability, a blood oxygen level, a blood pressure, a body temperature, or other parameters of the user of the wearable device 102. The sensors 108 may collect data continuously or intermittently, and the manners in which the sensors 108 collect data is not limited in the implementations of the present disclosure.

The wearable device 102 may further include a processor 110 and a storage 111. The storage 111 stores one or more applications or other executable instructions. The processor 110 is configured to run one or more of the applications or other executable instructions to process data captured by the sensors 108.

The server 104 may include a hardware server (e.g., a server), a software server (e.g., a web server and/or a virtual server), or a virtual server.

The server 104 is equipped with a server program 112 and a database 114. The server program 112 is able to access the database 114 of the server 104 to perform at least some of the functions of the server program 112. The database 114 is a database or other data storage for storing, managing, or otherwise making available data used for delivering the functions of the server program 112. For example, the database 114 may include a multimedia repository, and the multimedia repository includes data related to a plurality of multimedia items. For example, the database 114 may include a multimedia library, and the multimedia library includes data related to a plurality of multimedia items. For another example, the database 114 may be a relational database management system, an object database, an XML database, a configuration management database, a management information repository, one or more flat files, other suitable non-transient storage mechanisms, or a combination thereof.

The intermediate device 106 is a device configured to facilitate communications between the wearable device 102 and server 104. The intermediate device 106 may be a computing device, such as a mobile device (e.g., a smartphone, tablet, laptop, or other mobile device) or other kinds of computer devices (e.g., a desktop computer or other non-mobile computer). Alternatively, the intermediate device 106 may be or include a network hardware, such as a router, a switch, a load balancing device, an additional network device, or a combination thereof. As an alternative, the intermediate device 106 may be a network connectivity device. For example, the intermediate device 106 may be a networked power charger for the wearable device 102.

For another example, depending on a particular implementation of the intermediate device 106, the intermediate device 106 may run an application program 118, which configures the intermediate device 106 to send data to or receive data from the wearable device 102, and/or, to send data to or receive data from the server 104. Alternatively, the application program 118 may receive, in response to a user of the intermediate device 106 performing an action, commands from the intermediate device 106. For example, in the case where the intermediate device 106 is a computing device with a touchscreen display, the user of the intermediate device 106 may issue commands by touching a portion of the display that corresponds to a user interface element of the application program.

In some implementations, the intermediate device 106 is given access to the server program 112. The application program 118 may be a mobile application that has access to some or all of the functionality and/or data of the server program 112. For example, the intermediate device 106 may communicate with the server 104 via a network 116.

In some implementations, the intermediate device 106 receives data from the wearable device 102 via a short-range communication protocol. For example, the short-range communication protocol is Bluetooth®, Bluetooth® low energy, infrared, Z-wave, ZigBee, other types of protocols, or a combination thereof. The intermediate device 106 sends the data received from the wearable device 102 to the server 104 over the network 116. The network 16 may be, for example, a local area network, a wide area network, a machine-to-machine network, a virtual private network, or another public or private network. The network 116 may use a remote communication protocol, such as an Ethernet network, TCP, IP, power line communications, Wi-Fi, GPRS, GSM, CDMA, other types of protocols or a combination thereof.

In some implementations, the intermediate device 106 is omitted. For example, the wearable device 102 may be configured to communicate directly with the server 104 over the network 116, and the direct communication between the wearable device 102 and the server 104 over the network 116 may include the use of a remote, low-power system or another communication mechanisms. In some implementations, both the intermediate device 106 and the server 104 are omitted. For example, the wearable device 102 is configured to perform the above-mentioned functions of the server 104. In such implementations, the wearable device 102 may process and store data independently without other computing devices being involved.

The method for multimedia recommendation provided in the implementations of the present disclosure may be executed by the system for multimedia recommendation described above. In some implementations, the method for multimedia recommendation is executed by a single device in the system for multimedia recommendation. For example, the method is executed by the wearable device, or executed by the intermediate device or the server. In other implementations, the method for multimedia recommendation is executed by two or more devices in the system for multimedia recommendation, with each device executing a portion of the method. In an example, the intermediate device 106 or the wearable device 102 obtains user-related feature data of a user wearing the wearable device and sends the obtained user-related feature data to the server 104. The server may select, after receiving the user-related feature data, a multimedia item matching the user-related feature data from the database 114 such as a multimedia library, and send the selected multimedia item to the intermediate device 106 or to the wearable device 102, and the intermediate device 106 or the wearable device 102 provides the multimedia item to the user.

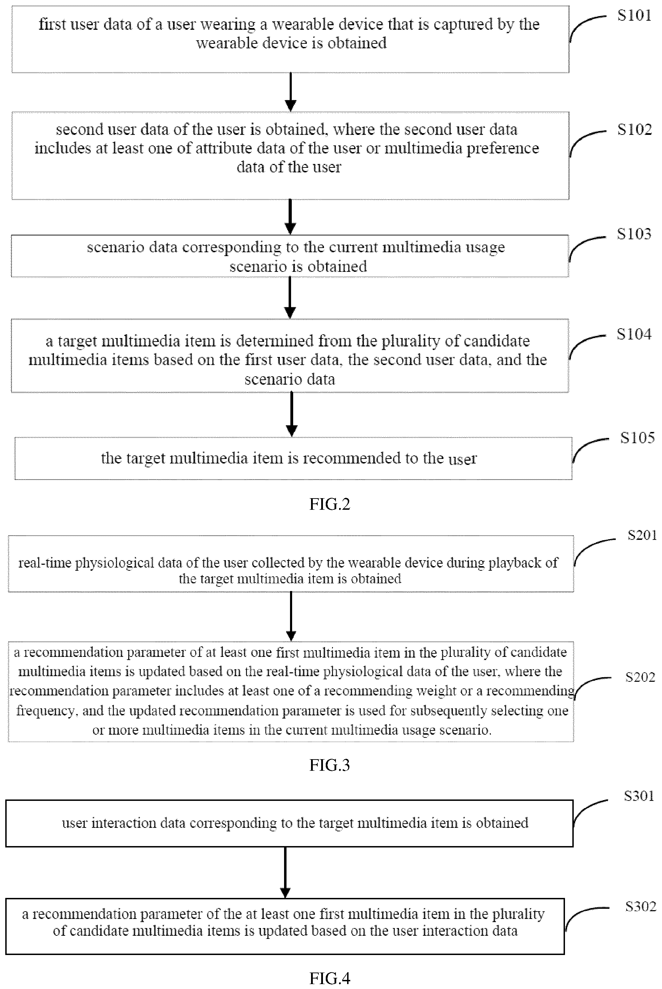

FIG. 2 is a flowchart of the method for multimedia recommendation in some implementations of the present disclosure. As shown in FIG. 2, the method for multimedia recommendation may include S101 to S104.

At S101, first user data of a user wearing a wearable device that is captured by the wearable device is obtained.

In some implementations, the wearable device may be equipped with one or more physiological sensors for collecting physiological data of the user. In the case where the wearable device is being worn by the user, the wearable device may perform one or more physiological measurements for the user wearing the wearable device with the one or more physiological sensors to obtain physiological data of the user. The first user data may include physiological data of the user. The physiological data may be obtained by performing one or more physiological measurements for the user at the current time, or by performing one or more physiological measurements for the user on the same day or over a recent period of time. The physiological data may be used for indicating a physiological condition and/or a health condition of the user at the current time or over a recent period of time. For example, the physiological data includes heart rate, stress, respiration rate, body temperature, blood pressure, oxygen saturation, sleep, PAI (Personal Activity Intelligence) value, and/or the like, and no limitation is set on the physiological data in the implementations of the present disclosure.

In some implementations, the wearable device may be equipped with one or more activity sensors for collecting activity data of the user, and obtain activity data of the user through the activity sensors, such as an activity type, an activity state, an activity intensity, an activity amount and/or the like. The activity state is used for indicating whether the user or a specific body part of the user is moving or not moving. The activity type is used for indicating whether the user is engaged in one of a micro-movement, exercise or daily activity, or indicating the type of exercise. The first user data may include activity data of the user, which may indicate the current activity or one or more recent activities of the user. For example, the activity data is used for indicating that the user is currently exercising or sleeping, whether or not the user has been exercising during the day, the exercise intensity and/or exercise amount of the user during the day or during the recent period of time, and/or the like.

In some implementations, the first user data may include activity data and physiological data of the user. Alternatively, the first user data may include other kinds of data, and no limitation is set on the first user data in the implementations of the present disclosure.

In some implementations, the wearable device may analyze the data of the user collected by one or more sensors to obtain the first user data. Alternatively, the wearable device may send the collected data of the user to the intermediate device or the server for analyzing and processing, and the intermediate device or the server may obtain the first user data of the user.

At S102, second user data of the user is obtained. The second user data includes at least one of attribute data of the user or multimedia preference data of the user.

In some implementations, the second user data includes attribute data of the user. The attribute data of the user may include personal data of the user. The personal data of the user refers to personalized factors for distinguishing the user from other users and that are relatively stable over a certain period of time, such as at least one of an age, gender, geographic area being located, occupation, personality type, living habits, multimedia usage period, circadian rhythms, a belonging user group, social network information, exercise patterns, the presence of sleep disorders, the type of sleep disorders or the like. In some implementations, the system for multimedia recommendation tracks behavior data in daily life of the user representing a long-term lifestyle of the user through the wearable device.

In some implementations, the second user data may include multimedia preference data of the user. The multimedia preference data is used for characterizing the multimedia preference of the user, or the multimedia preference of the user over a recent period of time. For example, the multimedia preference data indicates the types or genres of music that the user likes, the types or genres of music that the user dislikes and/or the like.

At S103, scenario data corresponding to the current multimedia usage scenario is obtained.

The scenario data represents a current multimedia usage scenario. In some implementations, the scenario data includes at least one of environmental data of the current environment, time data, or intention data. The intention data is used for indicating a purpose of providing the multimedia to the user, such as accompaniment to movements, work, concentration, stress relief and relaxation, sleep aid or the like. In some implementations, the intention data is obtained by receiving input data from the user. In some other implementations, the intention data is determined based at least in part on at least one of sound data, ambient light data, activity data, physiological data or positioning data captured by the wearable device. The time data is used for indicating the current time, such as day or night, weekday or weekend, or what time it is. The environmental data is used for indicating a situation of the environment in which the user is currently located. In some implementations, the environmental data includes location data, such as at home or in a public place, in a sports arena or on a vehicle, indoors or outdoors, etc. In other implementations, the environmental data includes at least one of weather data, temperature data, humidity data, light data, or the like, and no limitation is set on the realization of the scenario data in the implementations of the present disclosure.

In some implementations, the current multimedia usage scenario includes stress relief and relaxation, sleep aid, exercise, or concentration.

In some implementations, the wearable device is equipped with at least one environmental sensor for collecting one or more environmental parameters, and accordingly, the environmental data may be obtained through the environmental sensors of the wearable device. In some other implementations, the environmental data is obtained via the network or a wireless communication connection with one or more electronic devices, and no limitation is set in the implementations of the present disclosure.

At S104, a target multimedia item is determined from the plurality of candidate multimedia items based on the first user data, the second user data, and the scenario data.

For example, after obtaining the first user data, the second user data, and the scenario data, one or more multimedia items may be selected from the plurality of candidate multimedia items based on the first user data, the second user data, and the selected multimedia item, and the selected one or more multimedia items are taken as the target multimedia item.

In some implementations, the plurality of candidate multimedia items includes multiple audio candidates.

In some implementations, the system for multimedia recommendation tracks the behavior data in daily life of the user that represents the long-term lifestyle of the user through the wearable device, and provides the multimedia to the user at a specific time based on the behavior data. For example, if the user is accustomed to going to bed at around 10:00 p.m., in the case where the user uses the system for multimedia recommendation at around 10:00 p.m., the system for multimedia recommendation may provide sleep aid audio or provide soothing and quiet audio for relaxation to the user.

At S105, the target multimedia item is recommended to the user.

In some implementations, after determining the target multimedia item from the plurality of candidate multimedia items, the target multimedia item is provided directly to the user. In other implementations, information about the target multimedia item is sent to another electronic device, such as the intermediate device or the wearable device, so as to cause the intermediate device or wearable device to provide the target multimedia item to the user.

In the method for multimedia recommendation of some implementations of the present disclosure, the system obtains first user data of the user wearing the wearable device collected, obtains second user data of the user, where the second user data includes at least one of attribute data of the user or multimedia preference data of the user, obtains scenario data corresponding to the current multimedia usage scenario, determines the target multimedia item from the plurality of candidate multimedia items according to the first user data, the second user data and the scenario data, and enables the target multimedia item to be provided to the user, thus is conducive to improving the multimedia recommendation effect of the system for multimedia recommendation.

FIG. 3 is another flowchart of the method for multimedia recommendation in some implementations of the present disclosure. As shown in FIG. 3, after recommending the target multimedia item to the user, the method for multimedia recommendation further include S201 to S202.

At S201, real-time physiological data of the user collected by the wearable device during playback of the target multimedia item is obtained.

After providing the target multimedia item to the user, and during playback of the target multimedia item, physiological data of the user is collected in real time by one or more physiological sensors and/or activity sensors of the wearable device. The real-time physiological data of the user may include at least one of the heart rate, respiration rate, stress, body temperature, activity status or the like.

For example, if the system for multimedia recommendation provides the target audio A to the user in the case where the user is reading books, while the user is listening to the target audio A, the system for multimedia recommendation may obtain the real-time physiological data of the user, such as the heart rate, respiration rate, stress, movement of a hand and/or the like.

At S202, a recommendation parameter of at least one first multimedia item in the plurality of candidate multimedia items is updated based on the real-time physiological data of the user. In some implementations, the recommendation parameter includes at least one of a recommending weight or a recommending frequency. The updated recommendation parameter is used for subsequently selecting one or more multimedia items to be provided to the user in the current multimedia usage scenario.

Based on the obtained real-time physiological data of the user, the recommendation effect of the target multimedia item for the current multimedia usage scenario is analyzed, and the recommendation parameter of at least one first multimedia item in the plurality of candidate multimedia items is updated based on the analysis results. Optionally, the recommendation parameter includes at least one of the recommending weight or the recommending frequency. Subsequently, the multimedia item to be recommended may be selected from the plurality of candidate multimedia items based on the updated recommendation parameter of the at least one first multimedia item, so as to make the multimedia items provided by the system for multimedia recommendation to the user increasingly satisfy the demands of the user for multimedia in the current multimedia usage scenario, thereby improving the user experience.

In some implementations, the plurality of candidate multimedia items may be classified into a plurality of categories, each category including at least one candidate multimedia item. In some implementations, the candidate multimedia item may be categorized based on a multimedia characteristic of the candidate multimedia item, such as a music genre such as light music, white noise, nature sounds or the like, a music tempo, etc. In other implementations, the candidate multimedia item may be categorized based on the characteristics of the user groups, and each user group may correspond to one or more categories. No limitation is set on the classification of the candidate multimedia items in the implementations of the present disclosure.

In some implementations, the at least one first multimedia item may include at least one candidate multimedia item belonging to the same category as the target multimedia item. For example, if the target audio A is provided to the user in the scenario where the user is reading books, but the real-time physiological data of the user collected by the wearable device indicates that the heart rate of the user accelerates when listening to the target audio A, the recommending frequency or recommending weight of the at least one piece of candidate audio belonging to the same category as the target audio A may be reduced in the current scenario where the user is reading books, so as to reduce the probability that the candidate audio belonging to the same category as the target audio A is provided to the user in the current scenario where the user is reading books.

In some implementations, the at least one first multimedia item may include at least one candidate multimedia item belonging to a different category than the target multimedia item. For example, in the scenario where the user is reading books, if the target audio A is provided to the user, but it is known through the real-time physiological data of the user collected by the wearable device that the heart rate of the user is accelerated when listening to the target audio A, the recommending frequency and/or the recommending weight of one or more audio candidates in a candidate audio category corresponding to a lower tempo than that of the target audio A may be increased for the current book reading scenario, and alternatively, the recommending frequency and/or the recommending weight of one or more audio candidates that is more soothing and quieter than the target audio A may be increased for the current book reading scenario, so that the user can be calmed down as soon as possible.

FIG. 4 is another flowchart of the method for multimedia recommendation in some implementations of the present disclosure. As shown in FIG. 4, after recommending the target multimedia item to the user, the method for multimedia recommendation may further include S301 to S302.

At S301, user interaction data corresponding to the target multimedia item is obtained.

At S302, a recommendation parameter of the at least one first multimedia item in the plurality of candidate multimedia items is updated based on the user interaction data.

In some implementations, the user interaction data corresponding to the target multimedia item may be obtained after S201, but no limitation is set herein in the implementations of the present disclosure.

In some implementations, the recommendation parameter of the at least one first multimedia item may be updated based on the user interaction data. The at least one first multimedia item may include one or more multimedia items of the same or different category as the target multimedia item. The user interaction data, such as skipping, looping, favoriting, sharing, etc., is obtained when the target audio is playing for the user, and the recommendation parameter of the at least one piece of audio is updated based on the user interaction data.

In an example, in the scenario where the user is reading books, the user is provided with the target audio B, and a single cycle command is received during or after the playback of the target audio B, in this case, the recommending frequency and/or recommending weight of at least one candidate audio of the same category as the target audio B may be increased for the current book reading scenario.

In another example, in the scenario where the user is reading books, the target audio C is provided to the user, and the user sends a skip command while listening to the target audio C. In this case, the recommending frequency and/or recommending weight of at least one audio candidate of the same category as the target audio C in the current reading scenario may be reduced. For instance, the recommending weight of the at least one audio candidate of the same category as the target audio C may be set to 0. For another instance, the target audio C and at least one audio candidate of the same category may be removed from the plurality of audio candidates.

In some implementations, a recommendation parameter of the at least one candidate multimedia item of a different category than the target multimedia item may be updated based on the user interaction data. For example, in the scenario where the user is reading books, target audio E is provided to the user, and the user makes a skip command while listening to the target audio E. In this case, the recommending frequency and/or recommending weight of the at least one audio candidate of a different category than the target audio E may be increased for the current book reading scenario.

In some implementations, the recommendation parameter of at least one first multimedia item in the plurality of candidate multimedia items may be updated based on real-time physiological data of the user collected by the wearable device. In some implementations, the recommendation parameter of at least one first multimedia item in the plurality of candidate multimedia items may be updated based on user interaction data corresponding to the target multimedia item. In some implementations, the recommendation parameter of at least one first multimedia item in the plurality of candidate multimedia items may be updated based on the real-time physiological data of the user collected by the wearable device and the user interaction data corresponding to the target multimedia item.

In the method for multimedia recommendation in some implementations of the present disclosure, after recommending the target multimedia item to a user, physiological data of the user is acquired in real time through a wearable device to obtain real-time physiological feedback of the user, so as to increase the real-time nature of the feedback without interfering with the user's multimedia experience. The user interaction data of the user for the target multimedia item is acquired, and at least one of the physiological data of the user or the user interaction data is analyzed to evaluate the recommendation effect of the target multimedia item, and the recommendation parameter is updated according to the evaluation effect to make the subsequent recommendation of the multimedia items more suitable for the current multimedia usage scenario of the user. The user interaction data of the target multimedia item is obtained, the recommendation effect of the target multimedia item is evaluated by analyzing at least one of the physiological data of the user or the user interaction data, and the recommendation parameter is updated according to the evaluation effect, so as to make the subsequently provided multimedia items more suitable for the current multimedia usage scenario of the user.

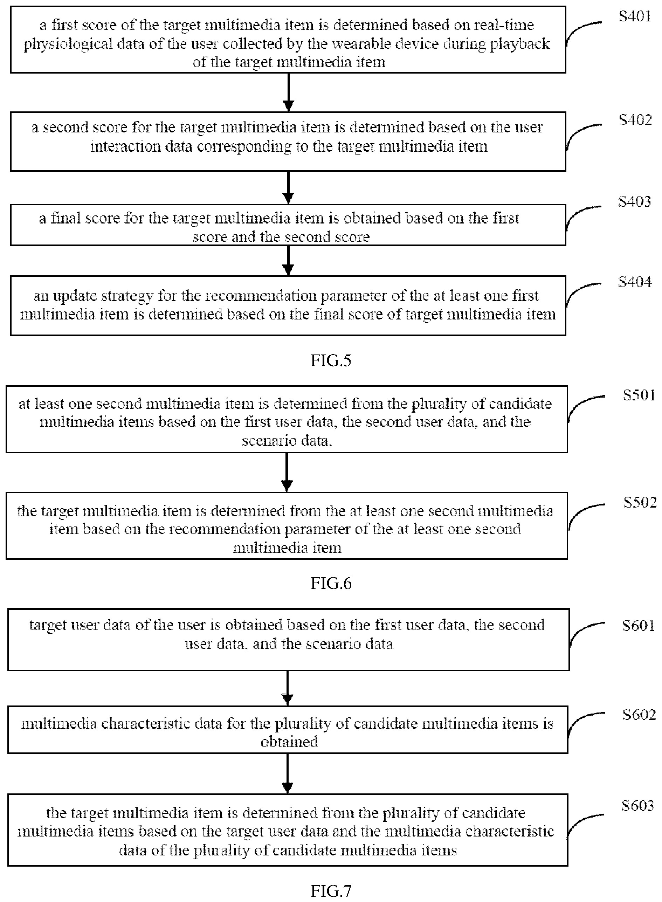

FIG. 5 is another flowchart of the method for multimedia recommendation in some implementations of the present disclosure. As shown in FIG. 5, updating the recommendation parameter of at least one first multimedia item in the plurality of candidate multimedia items may include S401 to S404.

At S401, a first score of the target multimedia item is determined based on real-time physiological data of the user collected by the wearable device during playback of the target multimedia item.

Based on the real-time physiological data of the user collected by the wearable device, the first score of the target multimedia item is obtained. In some implementations, reference physiological data of the user in the current multimedia usage scenario may be obtained, and the first score of the target multimedia item may be obtained based on the reference physiological data and the real-time physiological data of the user. The reference physiological data may be obtained by analyzing historical data collected from the user, or by analyzing the physiological data of the user group to which the user belongs. No limitation is set on obtaining of the reference physiological data in the implementations of the present disclosure. In an example, a reference range may be set for one or more physiological parameters of the user, such as the heart rate, respiration rate, stress, etc. The reference range may be an optimal value or a desired value range. The real-time physiological data of the user collected during the playback of the target multimedia item is compared with the reference range of the one or more physiological parameters to obtain the first score of the target multimedia item. In some other implementations, a first scoring model is trained, and the real-time physiological data of the user is processed by the first scoring model to obtain the first score of the target multimedia item.

In some examples, the first score is in the form of a percentage. Alternatively, the first score includes a level indicator indicative of how good or bad the recommendation of the target multimedia item is, such as excellent, good, poor, and so forth, which is not limited in the implementations of the present disclosure.

At S402, a second score for the target multimedia item is determined based on the user interaction data corresponding to the target multimedia item.

In some examples, a mapping relationship between the user interaction operations and the scores is predetermined. Then, a user interaction operation is identified based on the user interaction data, and the second score for the target multimedia item is determined based on the identified user interaction operation and the mapping relationship. In some other examples, a base score is set for the target multimedia item, and a value is assigned to each user operation.

Then, based on the user interaction data, score adjustment is performed on the basis of the base score of the target multimedia item to obtain the second score of the target multimedia item. For instance, if the base value of the second score is set to 50 for the target multimedia item, and if the user favorites the target multimedia item, 30 is added to the base value to get 80 as the second score of the target multimedia item. For another instance, if the user skips the target multimedia item, 10 is subtracted from the base value to get 40 as the second score of the target multimedia item. For another instance, if the user favorites the target multimedia item and sets the target multimedia item to play in a loop, 50 is added to the base score, resulting in 100 as the second score for the target multimedia item.

At S403, a final score for the target multimedia item is obtained based on the first score and the second score.

In some implementations, if only the first score of the target multimedia item is obtained, the first score of the target multimedia item is taken as the final score of the target multimedia item.

In some implementations, if only the second score of the target multimedia item is obtained, the second score of the target multimedia item is taken as the final score of the target multimedia item.

In some implementations, if both the first score and the second score of the target multimedia item are obtained, and both the first score and the second score are numerical values, a mathematical average of the first score and the second score is taken as the final score of the target multimedia item. Alternatively, a weighted sum of the first score and the second score is taken as the final score of the target multimedia item, where the weights of the first score and the second score may be set in advance or determined based on one or more factors, such as the current multimedia usage scenario, the reliability of the first score and second scores or the like. In an example, if the weights of the first score and the second score of the target multimedia item are both 0.5, and if the first score is 80 and the second score is 100, the final score of the target multimedia item is $80 \times 0.5 + 100 \times 0.5 = 90$. In some other examples, if at least one of the first score or the second score is a non-numeric value, the first score and the second score may be mapped or otherwise processed to obtain a final score, which is not limited in the implementations of the present disclosure.

At S404, an update strategy for the recommendation parameter of the at least one first multimedia item is determined based on the final score of the target multimedia item.

Based on the final score of the target multimedia item obtained as described above, the update strategy for the recommendation parameter of the at least one first multimedia item is determined. The update strategy includes at least one of whether or not to perform adjustment of the recommendation parameter, the adjustment performed in a direction of increase or decrease, or a magnitude of the adjustment.

In some implementations, a first score threshold is set, and if the final score of the target multimedia item is less than or equal to the first score threshold, at least one of the recommending weight or the recommending frequency of the at least one first multimedia item is reduced. For example, at least one of the recommending weight or the recommending frequency of at least one candidate multimedia item of the same category as the target multimedia item is reduced.

In some other implementations, a second score threshold is set, and if the final score of the target multimedia item is greater than or equal to the second score threshold, at least one of the recommending weight or the recommending frequency of the at least one first multimedia item is increased. For example, at least one of the recommending weight or recommending frequency of at least one candidate multimedia item of the same category as the target multimedia item is increased.

In some other implementations, both the first score threshold and the second score threshold are set. The second score threshold is greater than the first score threshold. If the final score of the target multimedia item is greater than the first score threshold and less than the second score threshold, at least one of the recommending weight or the recommending frequency of the at least one first multimedia item is maintained. For example, at least one of the recommending weight or recommending frequency of at least one candidate multimedia item of the same category as the target multimedia item is maintained.

In an example, in a sleep aid scenario, a sleep aid audio library includes a plurality of categories of audio candidates. Target audio F is provided to the user, and while the user is listening to the target audio F, the wearable device collects physiological data of the user in real time, such as at least one of a heart rate, a body movement, a respiration rate, a body temperature, or the like, and interaction of the user is detected through the wearable device or an audio player device. The audio player device may be a wearable device, a headphone device, an intermediate device or the like. If it is determined based on the detected real-time physiological data of the user that, the user gradually tends to fall asleep. For example, at least one of decreasing body movement, decreasing respiration rate, decreasing heart rate, decreasing body temperature or the like is detected, the recommendation parameter of at least one candidate audio in the same category of the target audio F is increased, and the candidate audio to be provided to the user subsequently may be selected based on the updated recommendation parameter.

In the method for multimedia recommendation in some implementations of the present disclosure, after recommending the target multimedia item to the user, the physiological data of the user is acquired in real time through the wearable device to obtain real-time physiological feedback of the user, which increases the real-time nature of the feedback without interfering with the multimedia experience of the user. The user interaction data of the user with respect to the target multimedia item is acquired, and the recommendation effect of the target multimedia item is evaluated with the score obtained from at least one of the real-time physiological data of the user or the user interaction data. The recommendation parameters are updated according to the evaluation effect, so as to make the subsequent recommendation of multimedia items more suitable for the current multimedia usage scenario of the user.

FIG. 6 is another flowchart of the method for multimedia recommendation in some implementations of the present disclosure. As shown in FIG. 6, the target multimedia item is determined from the plurality of candidate multimedia items based on the first user data, the second user data, and the scenario data, which includes S501 and S502.

At S501, at least one second multimedia item is determined from the plurality of candidate multimedia items based on the first user data, the second user data, and the scenario data.

In some implementations, the plurality of candidate multimedia items are analyzed based on the first user data, the second user data, and the scenario data obtained as described above, and the at least one second multimedia item that is suitable for the current multimedia usage scenario of the user is determined from the plurality of candidate multimedia items.

For example, there are 100 million audio candidates, and these 100 million audio candidates are analyzed to select 1,000 audio candidates suitable for the user in the book reading scenario from the 100 million audio candidates.

At S502, the target multimedia item is determined from the at least one second multimedia item based on the recommendation parameter of the at least one second multimedia item.

In some implementations, after determining the at least one second multimedia item from the plurality of candidate multimedia items, the target multimedia item may be determined from the at least one second multimedia item based on the recommending weight and/or the recommending frequency of the at least one second multimedia item.

The obtained 1,000 audio candidates include a variety of types of audio, and since the user has different preferences for different types of audio, different types of audio candidates have different recommending frequencies under the scenario where the user is reading books. For instance, if the user prefers to listen to piano music in the book reading scenario, the recommending frequency of the piano music may be set to 80% for the user in the book reading scenario. For another instance, if the user occasionally listens to guzheng music in the book reading scenario, the recommending frequency of guzheng music may be set to 20% for the user in the book reading scenario. If an audio recommendation list for the user in the book reading scenario includes 100 pieces of target audio, 80 pieces of piano music and 20 pieces of guzheng music may be selected from the 1,000 audio candidates and added to the recommendation list.

In some implementations, the recommending frequency may be updated based on at least one of a change in preferences, physiological state, or the lifestyle of the user, or based on a user group to which the user belongs.

FIG. 7 is another flowchart of the method for multimedia recommendation in some implementations of the present disclosure. As shown in FIG. 7, the target multimedia item is determined from the plurality of candidate multimedia items based on the first user data, the second user data, and the scenario data, which includes S601 to S602.

At S601, target user data of the user is obtained based on the first user data, the second user data, and the scenario data.

The obtained first user data, the second user data, and the scenario data may be combined to obtain the target user data representing the overall characteristics of the user.

In some implementations, the first user data includes activity data of the user and physiological data of the user. In this case, the target user data of the user may be obtained based on the activity data of the user, the physiological data of the user, the attribute data of the user, and the scenario data.

At S602, multimedia characteristic data for the plurality of candidate multimedia items is obtained.

For example, audio characteristic data of the audio candidates in the audio library of the system for audio recommendation is obtained. The audio characteristic data includes content characteristic data, association characteristic data, and service characteristic data of the audio candidates. The content characteristic data represents a data-based and/or semantic-based description of the audio candidate. The data-based description includes, for example, spectral distribution, tempo, etc. The semantic-based description includes, for example, instruments, genre, author, age, elements, tempo, duration, etc. The association characteristic data represents data-based and/or semantic-based similarities between each two or more audio candidates. The service characteristic data includes feedback information obtained after the audio candidates are recommended to the users, such as the number of playbacks, the number of favorites, audience, etc.

At S603, the target multimedia item is determined from the plurality of candidate multimedia items based on the target user data and the multimedia characteristic data of the plurality of candidate multimedia items.

In some implementations, the multimedia characteristic data for the plurality of candidate multimedia items may be obtained. In an example, a multimedia database stores a plurality of candidate multimedia items and multimedia characteristic data of the plurality of candidate multimedia items. In this case, the multimedia characteristic data of the plurality of candidate multimedia items may be obtained from the multimedia database. In another example, feature extraction is performed on the plurality of candidate multimedia items to obtain multimedia characteristic data of the plurality of candidate multimedia items. The feature extraction is performed on each candidate multimedia item, or the feature extraction is performed on each category of the multimedia items to obtain the multimedia characteristic data of at least one candidate multimedia item in the category, which is not limited in the implementations of the present application. In some implementations, after obtaining the multimedia characteristic data of the plurality of candidate multimedia items, filtering processing is performed on the plurality of candidate multimedia items based on the target user data and the multimedia characteristic data of the plurality of candidate multimedia items, to obtain the target multimedia item.

For example, there are 100 million audio candidates, and the 100 million audio candidates are filtered to obtain the most suitable 1,000 audio candidates from the 100 million audio candidates as the target audio. In some implementations, the filtering processing may include collaborative filtering, such as a user-based collaborative filtering recommendation algorithm, an item-based collaborative filtering recommendation algorithm, or a model-based collaborative filtering recommendation algorithm.

In some implementations, determining the target multimedia item from the plurality of candidate multimedia items based on the target user data and the multimedia characteristic data of the plurality of candidate multimedia items includes: determining recommendation probabilities of the plurality of candidate multimedia items based on the target user data and the multimedia characteristic data of the plurality of candidate multimedia items; and determining the target multimedia item from the plurality of candidate multimedia items based on the recommendation probabilities of the plurality of candidate multimedia items.

In some implementations, similarity matching is performed on the target user data and the multimedia characteristic data of each of the plurality of candidate multimedia items separately, so as to obtain a recommendation probability for each of the plurality of candidate multimedia items.

Subsequently, one or more candidate multimedia items with a recommendation probability satisfying a predetermined recommendation conditions is selected from the plurality of candidate multimedia items. In some implementations, one or more candidate multimedia items with a first few highest recommendation probabilities are selected from the plurality of candidate multimedia items as the target multimedia item, which is not limited in the implementations of the present disclosure.

Subsequently, the one or more candidate multimedia items with the recommendation probability satisfying the preset recommendation condition are recommended to the user.

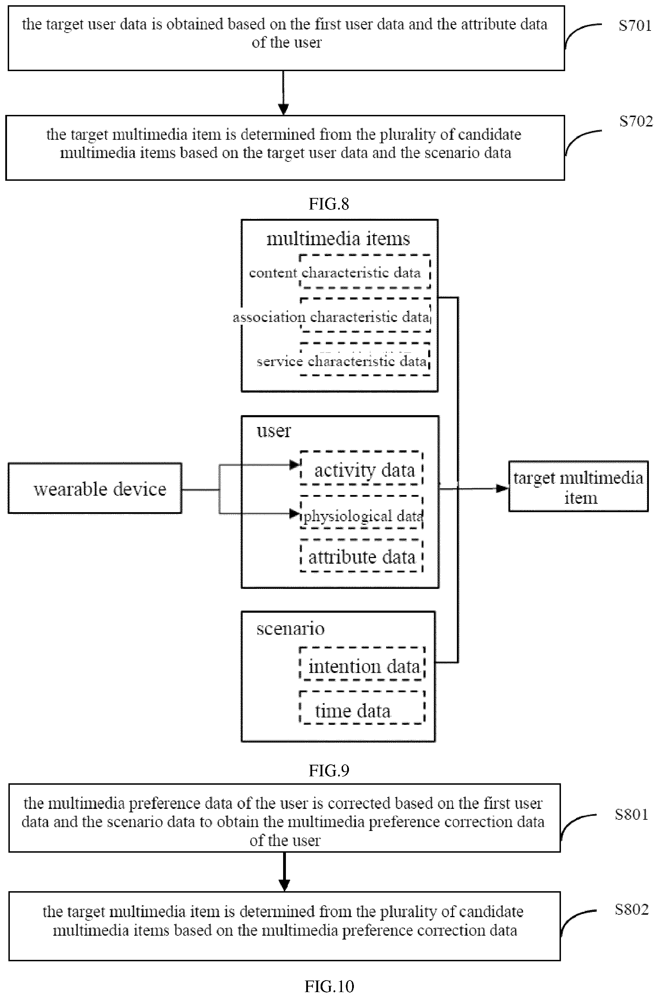

FIG. 8 is another flowchart of the method for multimedia recommendation in some implementations of the present disclosure. As shown in FIG. 8, the second user data includes attribute data of the user, and the target multimedia item is determined from the plurality of candidate multimedia items based on the first user data, the second user data, and the scenario data, which includes S701 to S702.

At S701, the target user data is obtained based on the first user data and the attribute data of the user.

The obtained first user data and the attribute data of the user are combined to obtain the target user data representing the overall characteristics of the user. In some implementations, the first user data includes at least one of activity data or physiological data of the user, and obtaining the target user data based on the first user data and the attribute data of the user may include: obtaining the target user data based on the activity data, the physiological data, and the attribute data of the user.

At S702, the target multimedia item is determined from the plurality of candidate multimedia items based on the target user data and the scenario data.

The target multimedia item is selected from the plurality of candidate multimedia items based on the obtained target user data and the scenario data.

FIG. 9 is an architecture diagram of the system for multimedia recommendation driven by the wearable device in some implementations of the present disclosure. As shown in FIG. 9, based on the target user data and the scenario data, the target multimedia item suitable for recommending to the user in the current scenario is determined from the plurality of candidate multimedia items, and is then recommended to the user.

In the method for multimedia recommendation in some implementations of the present disclosure, after recommending the target multimedia item to the user, the wearable device collects physiological data of the user in real time to obtain real-time feedback from the user, so as to increase the real-time nature of the feedback without interfering with the multimedia experience of the user. The user interaction data of the user is obtained for the target multimedia item, and the recommendation effect of the target multimedia item is evaluated through the score obtained from at least one of the physiological data of the user or the user interaction data, and the recommendation parameters are updated according to the evaluated recommendation effect, so as to make the subsequently recommended multimedia items more suitable for the current multimedia usage scenario of the user.

The fast-paced modern life and the presence of massive multimedia makes it difficult for users to maintain a stable multimedia interest. As a result, multimedia preferences of users are likely to change over time. However, the method for multimedia recommendations in related technologies does not take into account the changes of the multimedia preferences of the users over time, affecting the speed and accuracy of the method for multimedia recommendation.

FIG. 10 is another flowchart of the method for multimedia recommendation in some implementations of the present disclosure. As shown in FIG. 10, the second user data includes multimedia preference data of the user. The target multimedia item is determined from the plurality of candidate multimedia items based on the first user data, the second user data, and the scenario data, which may include S801 and S802.

At S801, the multimedia preference data of the user is corrected based on the first user data and the scenario data to obtain the multimedia preference correction data of the user. At S802, the target multimedia item is determined from the plurality of candidate multimedia items based on the multimedia preference correction data.

In some implementations, the obtaining of the second user data of the user may include A1 and A2.

At A1, multimedia playback history data is obtained.

In some implementations, the multimedia playback history data of the user may be obtained from an external audio/video playback device such as a wearable device worn by the user, a mobile terminal of the user, or a smart speaker of the user. For example, the intermediate device 106 or the server 104 may obtain the multimedia playback history data directly from the wearable device 102 worn by the user. Alternatively, the intermediate device 106 sends the obtained multimedia playback history data to the server 104, so that the server 104 obtains the multimedia playback history data of the user, which is not limited in the implementations of the present disclosure.

In some implementations, based on the type of multimedia to be recommended, the intermediate device 106 may obtain playback history data of the user playing the same type of multimedia from the wearable device 102 worn by the user.

At A2, multimedia preference data of the user is obtained based on the multimedia playback history data.

In some implementations, the multimedia preference data of the user is obtained based on the multimedia playback history data, which may further include: generating a historical multimedia item representation based on the multimedia playback history data; and obtaining the multimedia preference data for the user based on the historical multimedia item representation.

For example, according to one or more multimedia playback records in the multimedia playback history data, one or more multimedia items corresponding to each playback record are obtained, and a corresponding multimedia item representation is generated based on the characteristics of each of the one or more multimedia items. The historical multimedia item representation is obtained by combining the obtained multimedia item representations. For example, if the acquired multimedia playback history data include 30 playback records, 30 multimedia item representations may be generated, and the historical multimedia item representation is obtained by combining these 30 multimedia item representations.

In some implementations of the present disclosure, the multimedia item representation may be a symbol set including a plurality of symbols. The plurality of symbols may characterize a plurality of different dimensional features of one or more multimedia items. For example, in the case where the multimedia item is audio, the dimensional characterization of the multimedia item may include, but is not limited to, at least one of accompaniment, energy, loudness, protomusicity, instrumentality, pleasantness, music speed, liveness, voice, pitch, modulation of the audio or the like.

For example, assuming that there are M multimedia playback records, and a multimedia item representation containing N symbols is generated for the multimedia item corresponding to each multimedia playback record, each symbol representing characteristic of the multimedia item in a dimension. The historical multimedia item representation generated based on the multimedia playback records may be expressed as follows:

$$R = \begin{vmatrix} R_{1,1}, R_{1,2}, ... R_{1,N} \\ \vdots \\ R_{M,1}, R_{M,2}, ... R_{M,N} \end{vmatrix}$$

where R denotes the historical multimedia item representation, and $R_{M,1}$, $R_{M,2}$,...$R_{M,N}$ denote the *N* symbols of the *M*$^{th}$ multimedia item.

In some implementations, the multimedia preference data of the user is obtained based on the historical multimedia item representation, which further includes: inputting the historical multimedia item representation into a multimedia preference weight learning model to generate the multimedia preference data. The multimedia preference weight learning model is pre-trained to obtain a mapping relationship between the historical multimedia item representation and the multimedia preference data.

In some implementations, the multimedia preference weight learning model may be a Resnet (Residual Network) 50 model.

In some implementations, the multimedia preference data of the user is corrected based on the first user data and the scenario data to obtain the multimedia preference correction data of the user, which may include B 1 and B2.

At B 1, a multimedia preference correction parameter is obtained based on the first user data and the scenario data.

In some implementations, the obtaining of the multimedia preference correction parameter based on the first user data and the scenario data includes: generating the multimedia preference correction parameter for the user based on the physiological data and the environmental data of the user.

It is assumed that the acquired multimedia playback history data of the user contain Y playback records, then the number of pieces of acquired environmental data and physiological data of the user of a certain type is also Y

For example, the environmental data includes temperature data, and the physiological data includes the heart rate and sleep data of the user. It is assumed that the acquired multimedia playback history data of the user include 30 playback records corresponding to the last 30 days, each playback record corresponding to one day, then the acquired environmental data may include temperature data of the geographic location where the user is located for each of the last 30 days, and the acquired physiological data of the user may include the change of the heart rate of the user and the sleep data of the user for each of the last 30 days.

In some implementations, generation of the multimedia preference correction parameter for the user based on the physiological data and the environmental data of the user includes: inputting the physiological data and the environmental data of the user into a predetermined multimedia preference correction model to generate the multimedia preference correction parameter for the user. The multimedia preference correction model may be pre-trained to obtain a mapping relationship from the physiological data and the environmental data to the multimedia preference correction parameter.

In some implementations, the multimedia preference correction model may be a BiLSTM (Bi-directional Long-Short Term Memory) model.

In some implementations, a cross-stitch unit is configured for the multimedia preference weight learning model and the multimedia preference correction model to share information.

For example, in the case where the multimedia preference weight learning model and the environmental preference correction model are trained by using a loss function of a cross-entropy between matching probabilities and historical multimedia preferences of the user, the two models may exchange information to learn from each other, and coefficients of the models are updated. In the case where the multimedia preference data is obtained from the multimedia preference weight learning model and the multimedia preference correction parameter is obtained by the multimedia preference correction model, information is exchanged between the two models to update the weight coefficients of the respective models in real time according to the current condition, so as to improve the accuracy of the output results of the respective models.

At B2, the multimedia preference correction data of the user is obtained based on the multimedia preference data and the multimedia preference correction parameter.

In some implementations, the multimedia preference data includes a multimedia preference vector of length M, and the multimedia preference correction parameter includes a multimedia preference correction vector of length M. The obtaining of the multimedia preference correction data of the user based on the multimedia preference data and the multimedia preference correction parameter may include: multiplying the M elements of the multimedia preference vector with the M elements of the multimedia preference correction vector.

For example, it is supposed that the multimedia preference vector is $P = |P_1, P_2, ... P_M|$, and the multimedia preference correction vector is $C = |C_1, C_2, ... C_M|$, then the multimedia preference correction data may be expressed as follows:

$$I = P \times C = \left| P_1 \times C_1, P_2 \times C_2, ... P_M \times C_M \right| = \left| I_1, I_2, ... I_M \right|$$

where $I$ denotes the multimedia preference correction data, $I_1, I_2, ... I_M$ denote elements of the multimedia preference correction data.

The dimension of the multimedia preference vector and the dimension of the multimedia preference correction vector are the same as the number of multimedia playback records. For example, if there are M multimedia playback records, the dimension of the multimedia preference vector and the dimension of the multimedia preference correction vector are both M.

In some implementations, the determination of the target multimedia item from the plurality of candidate multimedia items based on the multimedia preference correction data includes: selecting the target multimedia item from the plurality of candidate multimedia items based on the multimedia preference correction data and the multimedia playback history data of the user.

In some implementations, the selection of the target multimedia item from the plurality of candidate multimedia items based on the multimedia preference correction data and multimedia playback history of the user may include C1 and C2.

At C1, a multimedia interest representation of the user is generated based on the multimedia preference correction data and the historical multimedia item representation.

For example, the multimedia interest representation of the user is obtained by multiplying the multimedia preference correction data with the historical multimedia item representation, which may be represented as follows:

$$IR = I \times R = \left| I_1, I_2, \ldots I_M \right| \times \begin{vmatrix} R_{1,1}, R_{1,2}, \ldots R_{1,N} \\ \vdots \\ R_{M,1}, R_{M,2}, \ldots R_{M,N} \end{vmatrix} = \left| IR_1, IR_2, \ldots IR_M \right|$$

where IR represents the multimedia interest representation, $IR_1, IR_2, \ldots IR_M$ represent multiple symbols in the multimedia interest representation.

At C2, the target multimedia item is selected from the plurality of candidate multimedia items based on the multimedia interest representation.

For example, the multimedia interest preference of the user may be determined based on the multimedia interest representation, and a similarity between each of the candidate multimedia items and the multimedia interest preference is obtained. In some implementations, the candidate multimedia item with a greatest similarity is recommended to the user. In some implementations, the recommendation of the candidate multimedia items to the user may be made in a descending order of similarity, but no limitation is set in the implementations of the present disclosure.

In the implementations of the present disclosure, the multimedia interest representation of the user is obtained based on multimodal data including the environmental data and the physiological data of the user, and the change of the multimedia preference of the user is taken into account, so as to track the change of the multimedia preferences of the user, and to improve the accuracy of the multimedia recommendation.

In some implementations, the selection of the target multimedia item from the plurality of candidate multimedia items based on the multimedia interest representation may include C21 to C24.

At C21, the multimedia item representation is obtained for each of the candidate multimedia items.

In some implementations of the present disclosure, C21 may be implemented with any one of the implementations of the present disclosure, which is not limited in the present disclosure and will not be repeated herein.

At C22, similarity-based matching is performed on the multimedia interest representation and the multimedia item representation of each of the candidate multimedia items separately to obtain a recommendation probability of each of the candidate multimedia items.

For example, cosine calculation may be performed on the multimedia interest representation and the multimedia item representation of each of the candidate multimedia items to obtain a matching degree for the each of the candidate multimedia items, and normalization processing is performed on the matching degree of each of the candidate multimedia items to obtain the recommendation probability of each of the candidate multimedia items.

In some implementations, it is assumed that there are a total of b candidate multimedia items, the matching degree of the $a^{th}$ (a ≤ b) candidate multimedia item may be expressed as $d_a$ :

$$d_a = \left( IR \times r_a^{T} \right) / \left( |IR| \times |r_a| \right)$$

The recommendation probability of the $a^{th}$ candidate multimedia item is $D_a$:

$$D_a = \frac{d_a}{\sum d}$$

At C23, the candidate multimedia item with a recommendation probability satisfying the predetermined recommendation condition is selected from the plurality of candidate multimedia items.

In some implementations, the candidate multimedia item with a highest recommendation probability is selected from the plurality of candidate multimedia items as the target multimedia item to be recommended. In some implementations, a first few candidate multimedia items with the highest recommendation probabilities are selected from the plurality of candidate multimedia items as the target multimedia item to be recommended.

At C24, the one or more candidate multimedia items with the recommendation probability satisfying the predetermined recommendation condition are recommended to the user.

By implementing the present disclosure, the recommendation probability of each candidate multimedia item is obtained based on the generated multimedia interest representation, improving the recommendation accuracy of the candidate multimedia items.

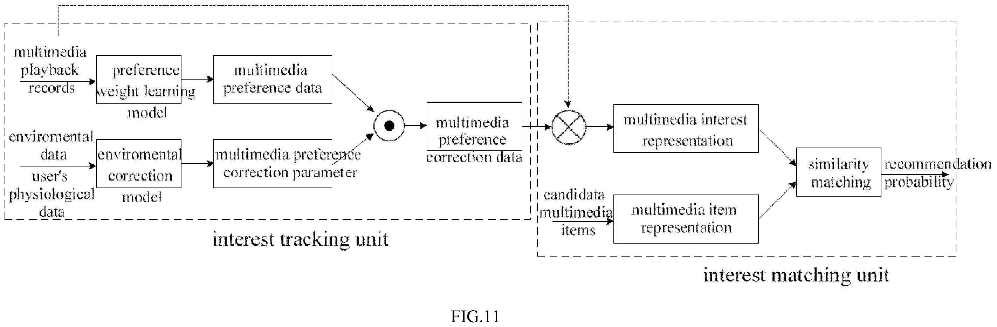

FIG. 11 is a schematic diagram of a structure of the system for multimedia recommendation in some implementations of the present disclosure. As shown in FIG. 11, the system for multimedia recommendation includes an interest tracking unit and an interest matching unit. The interest tracking unit is configured to input the historical multimedia item representation of the user into the preset multimedia preference weight learning model to obtain multimedia preference data, input environmental data and physiological data of the user into the preset multimedia preference correction model to the obtain multimedia preference correction parameter, and obtain the multimedia preference correction data based on the multimedia preference data and the multimedia preference correction parameter. The interest matching unit is configured to obtain the multimedia interest representation of the user based on the multimedia preference data and multimedia preference correction parameter, perform the similarity-based matching between the multimedia interest representation and the multimedia item representations of the candidate multimedia items to obtain the recommending probabilities of the candidate multimedia items.

By assuming the multimedia being music, an example of the system for multimedia recommendation is given below.

At S1, multimedia playback history data of the user is obtained, which includes 30 multimedia playback records, and a multimedia item representation with a dimension of 11 is generated based on each music playback record to obtain a historical multimedia representation R with a dimension of $30\times11$, which may be expressed as follows:

$$R = \begin{vmatrix} R_{1,1}, R_{1,2}, ... R_{1,11} \\ \vdots \\ R_{30,1}, R_{30,2}, ... R_{30,11} \end{vmatrix}$$

At S2, the historical multimedia representation with a dimension of $30\times11$ is input to a predefined multimedia preference weight learning model. The multimedia preference weight learning model may be constructed based on a backbone network of Resnet50. The output of the multimedia preference weight learning model is a mutimedia preference vector $P$ of the user with a dimension of 30, which may be expressed as follows:

$$P = \begin{vmatrix} P_1, \dot{P}_2, ... P_{30} \end{vmatrix}$$

At S3, environmental data and physiological data of the user with a dimension of $30\times8$ is obtained according to the weather, temperature, humidity, light, exercise data of the user, heart rate data of the user, PAI values of the user, and sleep data of the user within 30 days.

At S4, the environmental feature data and physiological feature data of the user with a dimension of $30\times8$ is input into a preset multimedia preference correction model. The multimedia preference correction model may be constructed in accordance with the BiLSTM architecture. A multimedia preference correction vector C with a dimension of 30 is obtained, which may be expressed as follows:

$$C = \begin{vmatrix} C_1, C_2, ... C_{30} \end{vmatrix}$$

At S5, a multimedia interest vector I of the user is obtained based on the multimedia preference vector P of the user and the music preference correction vector C. For example, the multimedia interest vector I of the user is obtained by multiplying the multimedia preference vector P with the multimedia preference correction vector C, which may be expressed as below:

$$I = P \times C = \begin{vmatrix} P_1 \times C_1, P_2 \times C_2, ... P_{30} \times C_{30} \end{vmatrix} = \begin{vmatrix} I_1, I_2, ... I_{30} \end{vmatrix}$$

At S6, a multimedia interest representation IR of the user with a dimension of 11 is obtained by multiplying the music interest vector I of dimension 30 with the historical multimedia representation A of dimension $30\times11$, which may be expressed as follows:

$$IR = I \times R = \begin{vmatrix} I_1, I_2, ... I_{30} \end{vmatrix} \times \begin{vmatrix} R_{1,1}, R_{1,2}, ... R_{1,11} \\ \vdots \\ R_{30,1}, R_{30,2}, ... R_{30,11} \end{vmatrix} = \begin{vmatrix} IR_1, IR_2, ... IR_{30} \end{vmatrix}$$

At S7, cosine similarity computation between the multimedia interest representation IR of the user and the multimedia representation r of each candidate multimedia item is performed to obtain a matching degree d of the each candidate multimedia item. The matching degrees of all candidate multimedia items are normalized to obtain a recommendation probability D of each candidate multimedia item, which may be expressed as follows:

$$d = \left( IR \times r^T \right) / \left( |IR| \times |r| \right) \quad D = \frac{d}{\sum d}$$

The system for multimedia recommendation may obtain the multimedia interest representation of the user considering a change of the user in the multimedia preference based on multimodal data including environmental data and physiological data of the user, and obtain the recommendation probabilities of the candidate multimedia items based on the multimedia interest representation of the user and the multimedia item representations of the candidate multimedia items, so as to realize tracking of a change in the multimedia preferences of the user and improve the accuracy of multimedia recommendations.

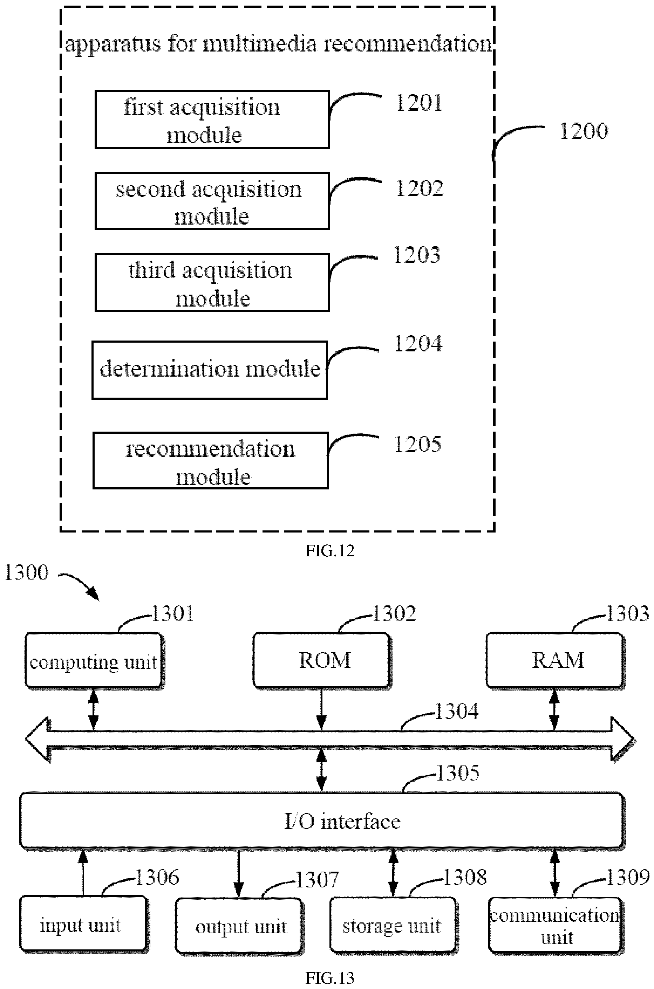

FIG. 12 is a schematic diagram of an apparatus for multimedia recommendation in some implementations of the present disclosure. As shown in FIG. 12, the apparatus for multimedia recommendation 1200 includes a first acquisition module 1201, a second acquisition module 1202, a third acquisition module 1203, a determination module 1204, and a recommendation module 1205.

The first acquisition module 1201 is configured to acquire first user data of a user wearing a wearable device that is collected by the wearable device. The second acquisition module 1202 is configured to acquire second user data of the user, where the second user data includes at least one of attribute data or multimedia preference data of the user. The third acquisition module 1203 is configured to obtain scenario data corresponding to the current multimedia usage scenario. The determination module 1204 is used to determine a target multimedia item from a plurality of candidate multimedia items based on the first user data, the second user data, and the scenario data. The recommendation module 1205 is configured to recommend the target multimedia item to the user.

In some implementations of the present disclosure, the apparatus for multimedia recommendation obtains first user data of the user wearing the wearable device that is collected by the wearable device, obtains second user data of the user, where the second user data includes at least one of the attribute data of the user or the multimedia preference data of the user, obtains the scenario data corresponding to the current multimedia usage scenario, determines the target multimedia item from the plurality of candidate multimedia items according to the first user data, the second user data and the scenario data, and recommends the target multimedia item to the user, which is conducive to improving the multimedia recommendation effect of the system for multimedia recommendation.

In some implementations, the apparatus for multimedia recommendation 1200 further includes an update module. The update module is configured to obtain real-time physiological data of the user collected by the wearable device during playback of the target multimedia item, update a recommendation parameter of at least one first multimedia item in the plurality of candidate multimedia items based on the real-time physiological data of the user. The recommendation parameter includes at least one of a recommending weight or a recommending frequency, and the updated recommendation parameter is used for subsequently selecting the multimedia items to be recommended to the user in the current multimedia usage scenario.

In some implementations, the update module is further configured to obtain user interaction data corresponding to the target multimedia item, and update the recommendation parameter of at least one first multimedia item in the plurality of candidate multimedia items based on the user interaction data.

In some implementations, the update module is further configured to determine a first score for the target multimedia item based on real-time physiological data of the user collected by the wearable device during playback of the target multimedia item, determine a second score for the target multimedia item based on the user interaction data corresponding to the target multimedia item, obtain a final score for the target multimedia item based on the first score and second score, and determine an update strategy for the recommendation parameter of the at least one first multimedia item based on the final score, the update strategy including at least one of whether or not to perform adjustment, the adjustment performed in a direction of increase or decrease, or a magnitude of the adjustment.

In some implementations, the plurality of candidate multimedia items are divided into a plurality of categories, and at least one first multimedia item belongs to the same category as the target multimedia item.

In some implementations, in response to the final score of the target multimedia item being less than or equal to a first score threshold, the update module is further configured to reduce at least one of a recommending weight or a recommending frequency of the at least one first multimedia item . Alternatively, in response to the final score of the target multimedia item being greater than or equal to a second score threshold, the update module is further configured to increase at least one of the recommending weight or the recommending frequency of the at least one first multimedia item.

In some implementations, in response to the final score of the target multimedia item being greater than the first score threshold and less than the second score threshold, the update module is further configured to maintain at least one of a recommending weight or a recommending frequency of the at least one first multimedia item.

In some implementations, the first user data includes physiological data of the user obtained from at least one physiological measurement based on the wearable device.

In some implementations, the scenario data includes at least one of environmental data the environment currently located, time data, or intention data.

In some implementations, the determination module 1204 is configured to determine at least one second multimedia item from the plurality of candidate multimedia items based on the first user data, the second user data, and the scenario data, and determine the target multimedia item from the at least one second multimedia item based on the recommendation parameter of the at least one second multimedia item.

In some implementations, the determination module 1204 is configured to obtain target user data of the user based on the first user data, the second user data, and the scenario data, obtain multimedia characteristic data of the plurality of candidate multimedia items, determine the target multimedia item from the plurality of candidate multimedia items based on the target user data and multimedia characteristic data of the plurality of candidate multimedia items, and determine the target multimedia item from the plurality of candidate multimedia items.

In some implementations, the determination module 1204 is configured to determine recommendation probabilities of the plurality of candidate multimedia items based on the target user data and multimedia characteristic data of the plurality of candidate multimedia items, and determine the target multimedia item from the plurality of candidate multimedia items based on the recommendation probabilities of the plurality of candidate multimedia items.

In some implementations, the second user data includes attribute data of the user. The determining module 1204 is configured to obtain target user data based on the first user data and the attribute data of the user, and determine the target multimedia item from the plurality of candidate multimedia items based on the target user data and the scenario data.

In some implementations, the second user data includes the multimedia preference data of the user. The determination module 1204 is configured to correct the multimedia preference data of the user based on the first user data and the scenario data to obtain multimedia preference correction data of the user, and determine the target multimedia item is determined from the plurality of candidate multimedia items based on the multimedia preference correction data.

In some implementations, the second acquisition module 1202 is configured to obtain multimedia playback history data of the user, obtain multimedia preference data of the user based on the multimedia playback history data.

In some implementations, the determination module 1204 is configured to obtain the multimedia preference correction parameter based on the first user data and the scenario data, and obtain multimedia preference correction data for the user based on the multimedia preference data and the multimedia preference correction parameter.

In some implementations, the multimedia preference data includes a multimedia preference vector of length M, and the multimedia preference correction parameter includes a multimedia preference correction vector of length M. The determining module 1204 is configured to obtain the multimedia preference correction data by multiplying the M elements in the multimedia preference vector by corresponding M elements in the multimedia preference correction vector.

In some implementations, the determination module 1204 is configured to select the target multimedia item from the plurality of candidate multimedia items based on the multimedia preference correction data and the multimedia playback history data of the user.

In some implementations, the plurality of candidate multimedia items includes a plurality of audio candidates.

In some implementations, the current multimedia usage scenario includes stress relief and relaxation, sleep aid, exercise, or concentration.

With regard to the apparatus in the implementations of the present disclosure, the specific manners in which the modules operate are described in detail in the implementations of the method, and will not be described in detail herein.

In some implementations of the present disclosure, the present disclosure further provides an electronic device, including: at least one processor, and a memory, storing at least one instruction. The at least one processor is configured to execute the at least one instruction, so as to realize the method for multimedia recommendation in any of the preceding implementations.

FIG. 13 is a schematic block diagram of an electronic device in some implementations of the present disclosure. The electronic device is intended to represent various forms of digital computers, such as laptops, desktop computers, workstations, personal digital assistants, servers, blade servers, mainframe computers, and other suitable computers. The components, connections and relationships of the components, and their functions shown herein are merely exemplary and are not intended to limit the implementation of the present application as described and/or claimed herein.

As shown in FIG. 13, the device 1300 includes a computing unit 1301 performs appropriate actions and processes based on a computer program stored in a Read -Only Memory (ROM) 1302 or loaded to a Random Access Memory (RAM) 1303 from a storage unit 1308. The RAM 1303 further stores various programs and data required for the operation of the device 1300. Computing unit 1301, ROM 1302, and RAM 1303 are connected to each other via bus 1304. Input/Output (I/O) interface 1305 is also connected to bus 1304.

A plurality of components of the device 1300 are connected to the I/O interfaces 1305, including: an input unit 1306, e.g., keyboards, mice, etc., an output unit 1307, e.g., various types of displays, speakers, etc., a storage unit 1308, e.g., magnetic disks, CD-ROMs, etc., or a communication unit 1309, e.g., network cards, modems, wireless communication transceivers, etc. The communication units 1309 allow the device 1300 to exchange information/data with other devices via computer networks, such as the Internet, and/or various telecommunication networks.

The computing unit 1301 may include a variety of general purpose and/or specialized processing components with processing and computational capabilities. Some examples of the computing unit 1301 includes, but is not limited to, Central Processing Units (CPUs), Graphics Processing Units (GPUs), various specialized Artificial Intelligence (AI) computational chips, various computational units running machine learning model algorithms, Digital Signal Processors (DSPs), or any suitable processors, controllers, microcontrollers, or the like. The computing unit 1301 performs the method and processes described above, such as the method for multimedia recommendation. For example, in some implementations, the method for multimedia recommendation may be implemented as a computer software program that is tangibly contained in a machine-readable medium, such as the storage unit 1308. In some implementations, part or all of the computer program may be loaded and/or installed on the device 1300 via the ROM 1302 and/or communication unit 1309. When the computer program is loaded into RAM 1303 and executed by computing unit 1301, one or more steps of the method for multimedia recommendation described above may be performed. Alternatively, in other implementations, the computing unit 1301 may be configured to perform the method for multimedia recommendation in any other suitable manner (e.g., with the aid of firmware).

Various implementations of the systems and techniques described above can be found in digital electronic circuit systems, integrated circuit systems, Field Programmable Gate Arrays (FPGAs), Application Specific Integrated Circuits (ASICs), Application Specific Standard Parts (ASSPs), Systems On Chip (SOCs), Complex Programmable Logic Devices (CPLDs), computer hardware, firmware, software, and/or any combination thereof. These various implementations may include an implementation in one or more computer programs executable and/or interpretable on programmable systems including at least one programmable processor. The programmable processor may be a dedicated or general-purpose programmable processor, receives data and instructions from the storage system, the at least one input device and the at least one output device, and transmits the data and instructions to the storage system, the at least one input device, and the at least one output device.

The program code for implementing the method of the present disclosure may be written in any combination of one or more programming languages.

The program code may be provided to a processor or controller of a general-purpose computer, special-purpose computer, or other programmable data processing device, such that the program code, when executed by the processor or controller, causes the functions/operations specified in the flowchart and/or block diagram to be performed. The program code may be executed entirely on a machine, partially on the machine, partially on the machine and partially on a remote machine as a stand-alone software package, or entirely on a remote machine or server.

In the context of the present disclosure, a machine-readable medium may be a tangible medium containing or storing a program for use by or in conjunction with a command execution system, device, or apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination thereof. In some more specific example, the machine-readable storage medium includes electrical connections based on one or more wires, portable computer disks, hard disks, random access memory (RAM), read-only memory (ROM), erasable programmable read-only memory (EPROM), flash memory, fiber optics, Compact Disc Read-Only Memory (CD-ROM), optical storage devices, magnetic storage devices, or any suitable combination thereof.

To provide interaction with users, the systems and techniques described herein may be implemented on a computer including: a display device (e.g., a Cathode Ray Tube (CRT) or Liquid Crystal Display (LCD) monitor) for displaying information to the users, and a keyboard and a pointing device (e.g., a mouse or trackball) through which the users can provide input to the computer. Other types of devices may also be configured to provide interaction with the users. For example, the feedback provided to the user may be sensory feedback in any form (e.g., visual feedback, auditory feedback, or haptic feedback), and the input from the users may be received in any form, including acoustic input, voice input, or haptic input.

The systems and techniques described herein may be implemented in computing systems that include back-end components (e.g., as a data server), or computing systems that include middleware components (e.g., an application server), or computing systems that include front-end components (e.g., a user computer that has a graphical user interface or a web browser through which a user can interact with the systems and techniques described herein), or a computing system that includes any combination of such back-end components, middleware components, or front-end components. The components of the system may be interconnected by digital data communications in any form or medium (e.g., a communications network). Examples of communication networks include Local Area Networks (LANs), Wide Area Networks (WANs), the Internet, or block-chain networks.

The computer system may include a client device and a server. The client device and the server are generally remote from each other and typically interact with each other over a communication network. The relationship between the client device and the server is created by computer programs that run on corresponding computers and have a client-server relationship with each other. The server can be a cloud server, also known as a cloud computing server or a cloud host, which is a host product in the cloud computing service system to solve the shortcomings of difficult to manage and poor performance in business scalability in traditional physical hosts and VPS (Virtual Private Server) services. The server may be a server for distributed systems, or a server that incorporate block chain.

In some implementations of the present disclosure, a non-transient computer-readable storage medium storing computer instructions is provided. The computer instructions are configured to cause the computer to implement the method for multimedia recommendation in any of the above implementations.

In some implementations of the present disclosure, a computer program product including a computer program is provided. The computer program, when executed by a computer, implements the method for multimedia recommendation in any of the above implementations .

In the description of the present disclosure, it is to be understood that, the orientations or positional relationships indicated by the terms "center", "longitudinal", "lateral", "length ", "width", "thickness", "up", "down", "front", "back", "left", "right", "vertical", horizonal", "top", "bottom", "inside", "outside ", "clockwise", "counterclockwise", "axial", "radial", "circumferential" and the like are based on those shown in the accompanying drawings, and are intended only to facilitate the description of the present disclosure and to simplify the description. The terms are not intended to indicate or to imply that the device or element referred to must be constructed and operated with a particular orientation, and therefore are not to be construed as a limitation of the present disclosure.

Furthermore, the terms "first" and "second" are used for descriptive purposes only and are not to be understood as indicating or implying relative importance or implicitly specifying the number of technical features indicated. Thus, a feature defined with "first" or "second" may expressly or implicitly include one or more such features. In the description of this application, unless otherwise expressly and specifically limited, the terms "the plurality of" and "multiple" means two or more.

In the specification of the present specification, the description with reference to the terms "an example", "some implementations", "examples", "specific examples", "some examples" or the like means that the specific features, structures, materials, or characteristics described in conjunction with the implementations or examples are included in at least one implementation or example of the present disclosure. In this specification, the exemplary expressions of the above terms do not necessarily refer to the same implementation or example. Furthermore, the specific features, structures, materials, or characteristics described may be combined in any one or more of the implementations or examples in a suitable manner. In addition, those skilled in the art may incorporate and combine different implementations or examples and features thereof described in this specification without contradicting each other.

Although implementations of the present disclosure are shown and described above, it is to be understood that, the above implementations are exemplary and are not to be construed as limiting the present disclosure. A person of ordinary skill in the art may make changes, modifications, substitutions, and variations to the above implementations within the scope of the present disclosure.

**Claims**

1. A method for multimedia recommendation, comprising:

   obtaining first user data of a user wearing a wearable device that is captured by the wearable device;
   obtaining second user data of the user, wherein the second user data comprises at least one of attribute data of the user or multimedia preference data of the user;
   obtaining scenario data corresponding to a current multimedia usage scenario;
   determining a target multimedia item from a plurality of candidate multimedia items based on the first user data, the second user data, and the scenario data; and
   recommending the target multimedia item to the user.

2. The method according to claim 1, further comprising: after recommending the target multimedia item to the user,

   obtaining real-time physiological data of the user collected by the wearable device during playback of the target multimedia item; and
   updating, based at least in part on the real-time physiological data of the user, a recommendation parameter of at least one first multimedia item in the plurality of candidate multimedia items;
   wherein the recommendation parameter comprises at least one of a recommending weight or a recommending frequency, and the updated recommendation parameter is used for subsequently selecting a multimedia item to be recommended to the user in the current multimedia usage scenario.

3. The method according to claim 1 or 2, further comprising: after recommending the target multimedia item to the user,

obtaining user interaction data corresponding to the target multimedia item; and
updating a recommendation parameter of at least one first multimedia item in the plurality of candidate multimedia items based on the user interaction data.

4. The method according to claim 2 or 3, wherein updating the recommendation parameter of at least one first multimedia item in the plurality of candidate multimedia items comprises:

determining a first score of the target multimedia item based on real-time physiological data of the user collected by the wearable device during playback of the target multimedia item;
determining a second score of the target multimedia item based on user interaction data corresponding to the target multimedia item;
obtaining a final score of the target multimedia item based on the first score and the second score; and
determining an update strategy for the recommendation parameter of the at least one first multimedia item based on the final score, wherein the update strategy indicates at least one of whether or not to perform adjustment, the adjustment performed in a direction of increase or decrease, or a magnitude of the adjustment.

5. The method according to claim 4, wherein the plurality of candidate multimedia items are divided into a plurality of categories, and the at least one first multimedia item belongs to a same category as the target multimedia item.

6. The method according to claim 4 or 5, wherein determining the update strategy for the recommendation parameter of the at least one first multimedia item based on the final score comprises:

in response to the final score of the target multimedia item being less than or equal to a first score threshold, reducing at least one of the recommending weight or the recommending frequency of the at least one first multimedia item; or
in response to the final score of the target multimedia item being greater than or equal to a second score threshold, increasing at least one of a recommending weight or a recommending frequency of the at least one first multimedia item.

7. The method according to any one of claims 4 to 6, wherein determining the update strategy for the recommendation parameter of the at least one first multimedia item based on the final score comprises:
in response to the final score of the target multimedia item being greater than a first score threshold and less than a second score threshold, keeping at least one of a recommending weight or a recommending frequency of the at least one first multimedia item unchanged.

8. The method according to any one of claims 1 to 7, wherein the first user data comprises physiological data obtained from at least one physiological measurement of the user by the wearable device.

9. The method according to any one of claims 1 to 8, wherein the scenario data comprises at least one of environmental data of current environment, time data, or intention data.

10. The method according to any one of claims 1 to 9, wherein determining the target multimedia item from the plurality of candidate multimedia items based on the first user data, the second user data, and the scenario data, comprises:

determining at least one second multimedia item from the plurality of candidate multimedia items based on the first user data, the second user data, and the scenario data; and
determining the target multimedia item from the at least one second multimedia item based on a recommendation parameter of the at least one second multimedia item.

11. The method according to any one of claims 1 to 10, wherein determining the target multimedia item from the plurality of candidate multimedia items based on the first user data, the second user data, and the scenario data, comprises:

obtaining target user data of the user based on the first user data, the second user data and the scenario data;
obtaining multimedia characteristic data of the plurality of candidate multimedia items; and
determining the target multimedia item from the plurality of candidate multimedia items based on the target user data and the multimedia characteristic data of the plurality of candidate multimedia items.

**12.** The method according to claim 11, wherein determining the target multimedia item from the plurality of candidate multimedia items based on the target user data and the multimedia characteristic data of the plurality of candidate multimedia items, comprises:

determining recommendation probabilities of the plurality of candidate multimedia items based on the target user data and the multimedia characteristic data of the plurality of candidate multimedia items; and
determining the target multimedia item from the plurality of candidate multimedia items based on the recommendation probabilities of the plurality of candidate multimedia items.

**13.** The method according to any one of claims 1 to 10, wherein the second user data comprises attribute data of the user; and
wherein determining the target multimedia item from the plurality of candidate multimedia items based on the first user data, the second user data, and the scenario data, comprises:

obtaining target user data of the user based on the first user data and the attribute data of the user; and
determining the target multimedia item from the plurality of candidate multimedia items based on the target user data and the scenario data.

**14.** The method according to any one of claims 1 to 12, wherein the second user data comprises multimedia preference data of the user; and
wherein determining the target multimedia item from the plurality of candidate multimedia items based on the first user data, the second user data, and the scenario data, comprises:

correcting the multimedia preference data of the user based on the first user data and the scenario data to obtain multimedia preference correction data of the user; and
determining the target multimedia item from the plurality of candidate multimedia items based on the multimedia preference correction data.

**15.** The method according to claim 14, wherein obtaining the second user data of the user comprises:

obtaining multimedia playback history data of the user; and
obtaining the multimedia preference data of the user based on the multimedia playback history data.

**16.** The method according to claim 14 or 15, wherein correcting the multimedia preference data of the user based on the first user data and the scenario data to obtain multimedia preference correction data of the user, comprises:

obtaining a multimedia preference correction parameter based on the first user data and the scenario data; and
obtaining the multimedia preference correction data of the user based on the multimedia preference data and the multimedia preference correction parameter.

**17.** The method according to claim 16, wherein the multimedia preference data comprises a multimedia preference vector of length M, the multimedia preference correction parameter comprises a multimedia preference correction vector of length M; and
wherein obtaining the multimedia preference correction data of the user based on the multimedia preference data and the multimedia preference correction parameter comprises:
multiplying M elements of the multimedia preference vector with M elements of the multimedia preference correction vector to obtain the multimedia preference correction data.

**18.** The method according to any one of claims 14 to 17, wherein determining the target multimedia item from the plurality of candidate multimedia items based on the multimedia preference correction data, comprises:
selecting the target multimedia item from the plurality of candidate multimedia items based on the multimedia preference correction data and the multimedia playback history data of the user.

**19.** The method according to any one of claims 1 to 18, wherein the plurality of candidate multimedia items comprise a plurality of audio candidates.

**20.** The method according to any one of claims 1 to 19, wherein the current multimedia usage scenario comprises stress relief and relaxation, sleep aid, exercise or concentration.

21. An apparatus for multimedia recommendation, comprising:

a first obtaining module, configured to obtain first user data of a user wearing a wearable device that is collected by the wearable device;

a second obtaining module, configured to obtain second user data of the user, wherein the second user data comprises at least one of attribute data of the user or multimedia preference data of the user;

a third acquisition module, configured to obtain scenario data corresponding to a current multimedia usage scenario;

a determination module, configured to determine a target multimedia item from a plurality of candidate multimedia items based on the first user data, the second user data and the scenario data; and

a recommendation module, configured to recommend the target multimedia item to the user.

22. An electronic device, comprising:

at least one processor; and

a memory storing at least one instruction;

wherein the at least one processor is configured to execute the at least one instruction, so as to implement the method according to any one of claims 1-20.

23. A non-transient computer-readable storage medium storing computer instructions, wherein the computer instructions are configured to cause a computer device to perform the method according to any one of claims 1-20.

24. A computer program product comprising a computer program, wherein the computer program, when executed by a computer device, implement the method according to any one of claims 1-20.

FIG.1

first user data of a user wearing a wearable device that is captured by the wearable device is obtained — S101

second user data of the user is obtained, where the second user data includes at least one of attribute data of the user or multimedia preference data of the user — S102

scenario data corresponding to the current multimedia usage scenario is obtained — S103

a target multimedia item is determined from the plurality of candidate multimedia items based on the first user data, the second user data, and the scenario data — S104

the target multimedia item is recommended to the user — S105

FIG.2

real-time physiological data of the user collected by the wearable device during playback of the target multimedia item is obtained — S201

a recommendation parameter of at least one first multimedia item in the plurality of candidate multimedia items is updated based on the real-time physiological data of the user, where the recommendation parameter includes at least one of a recommending weight or a recommending frequency, and the updated recommendation parameter is used for subsequently selecting one or more multimedia items in the current multimedia usage scenario. — S202

FIG.3

user interaction data corresponding to the target multimedia item is obtained — S301

a recommendation parameter of the at least one first multimedia item in the plurality of candidate multimedia items is updated based on the user interaction data — S302

FIG.4

| a first score of the target multimedia item is determined based on real-time physiological data of the user collected by the wearable device during playback of the target multimedia item | S401 |
|---|---|

| a second score for the target multimedia item is determined based on the user interaction data corresponding to the target multimedia item | S402 |

| a final score for the target multimedia item is obtained based on the first score and the second score | S403 |

| an update strategy for the recommendation parameter of the at least one first multimedia item is determined based on the final score of target multimedia item | S404 |

FIG.5

| at least one second multimedia item is determined from the plurality of candidate multimedia items based on the first user data, the second user data, and the scenario data. | S501 |
|---|---|

| the target multimedia item is determined from the at least one second multimedia item based on the recommendation parameter of the at least one second multimedia item | S502 |

FIG.6

| target user data of the user is obtained based on the first user data, the second user data, and the scenario data | S601 |
|---|---|

| multimedia characteristic data for the plurality of candidate multimedia items is obtained | S602 |

| the target multimedia item is determined from the plurality of candidate multimedia items based on the target user data and the multimedia characteristic data of the plurality of candidate multimedia items | S603 |

FIG.7

| the target user data is obtained based on the first user data and the attribute data of the user | S701 |

↓

| the target multimedia item is determined from the plurality of candidate multimedia items based on the target user data and the scenario data | S702 |

FIG.8

**multimedia items**
- content characteristic data
- association characteristic data
- service characteristic data

**wearable device**

**user**
- activity data
- physiological data
- attribute data

**target multimedia item**

**scenario**
- intention data
- time data

FIG.9

| the multimedia preference data of the user is corrected based on the first user data and the scenario data to obtain the multimedia preference correction data of the user | S801 |

↓

| the target multimedia item is determined from the plurality of candidate multimedia items based on the multimedia preference correction data | S802 |

FIG.10

FIG.11

apparatus for multimedia recommendation

first acquisition module — 1201

second acquisition module — 1202

third acquisition module — 1203

determination module — 1204

recommendation module — 1205

1200

FIG.12

1300

computing unit — 1301

ROM — 1302

RAM — 1303

1304

I/O interface — 1305

input unit — 1306

output unit — 1307

storage unit — 1308

communication unit — 1309

FIG.13

## INTERNATIONAL SEARCH REPORT

International application No.

**PCT/CN2023/083692**

### A. CLASSIFICATION OF SUBJECT MATTER

G06F 16/635(2019.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, WPABS, CNABS, DWPI, USTXT, WOTXT, EPTXT, CNKI, IEEE: 个性化, 推荐, 手表, 手环, 偏好, 场景, 时间, 位置, 心率, 生理, personalize, recommend, watch, bracelet, preference, scene, time, location, heart rate, physiology

### C. DOCUMENTS CONSIDERED TO BE RELEVANT

| Category* | Citation of document, with indication, where appropriate, of the relevant passages | Relevant to claim No. |
|---|---|---|
| X | CN 109582821 A (NUBIA TECHNOLOGY CO., LTD.) 05 April 2019 (2019-04-05) description, paragraphs 67-111 and 125 | 1-24 |
| X | US 2018314959 A1 (IBM) 01 November 2018 (2018-11-01) description, paragraphs 27-87 | 1-24 |
| X | CN 109829107 A (HUAWEI TECHNOLOGIES CO., LTD.) 31 May 2019 (2019-05-31) description, paragraphs 98-171 | 1-24 |
| A | CN 107943894 A (BAIDU ONLINE NETWORK TECHNOLOGY (BEIJING) CO., LTD.) 20 April 2018 (2018-04-20) entire document | 1-24 |
| A | US 2021034661 A1 (ROVI GUIDES INC.) 04 February 2021 (2021-02-04) entire document | 1-24 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 May 2023** | **06 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083692**

| Patent document cited in search report | | | Publication date (day/month/year) | Patent family member(s) | | | Publication date (day/month/year) |
|---|---|---|---|---|---|---|---|
| CN | 109582821 | A | 05 April 2019 | None | | | |
| US | 2018314959 | A1 | 01 November 2018 | US | 11334804 | B2 | 17 May 2022 |
| CN | 109829107 | A | 31 May 2019 | US | 2022080261 | A1 | 17 March 2022 |
| | | | | WO | 2020151387 | A1 | 30 July 2020 |
| | | | | EP | 3893129 | A1 | 13 October 2021 |
| | | | | VN | 81968 | A | 25 November 2021 |
| | | | | IN | 202117028495 | A | 03 December 2021 |
| CN | 107943894 | A | 20 April 2018 | US | 2019147058 | A1 | 16 May 2019 |
| | | | | JP | 2019091422 | A | 13 June 2019 |
| | | | | JP | 6773739 | B2 | 21 October 2020 |
| US | 2021034661 | A1 | 04 February 2021 | None | | | |

Form PCT/ISA/210 (patent family annex) (July 2022)

**REFERENCES CITED IN THE DESCRIPTION**

**Patent documents cited in the description**

- CN 202210307260
- CN 202210306451